# EUROPEAN PATENT SPECIFICATION

(11) **EP 2 412 463 B1**
(45) Date of publication and mention of the grant of the patent: **07.09.2016**
(21) Application number: 11175137.6
(22) Date of filing: 25.07.2011
(51) Int. Cl.: B23B 31/00

(54) **Pull stud bolt and computer numerical control machine**
Zuganker und numerisch gesteuerte Werkzeugmaschine
Goujon de traction et machine-outil à commande numérique

(30) Priority: 30.07.2010 IT CO20100040
(43) Date of publication of application: 01.02.2012
(73) Proprietor: Nuovo Pignone S.p.A., 50127 Florence (IT)
(72) Inventor: Cigni, Emanuele, 50127 Florence (IT); Donati, Maurizio, 50127 Florence (IT)
(74) Representative: Illingworth-Law, William Illingworth

(56) References cited:
- DE-A1- 10 129 501
- DE-A1- 19 503 072
- DE-U1-202008 016 195
- US-A- 6 059 702

## Description

### Field of the Invention

The present invention relates to a pull stud bolt according to the preamble of claim 1 and to a computer numerical control machine. Such a pull stud bolt is known from DE 202008 016 195 U.

### Description of Related Art

Machining generally refers to a group of processes used to remove material from a workpiece to obtain a desired shape or geometry. Machining is often performed on metal workpieces to create a piece for a specific application. Examples of machining processes include milling, turning and drilling. In milling processes, the cutting tool is rotated with the cutting surfaces being brought against the workpiece to remove the metal. In turning processes, the workpiece is rotated against the cutting tool. For drilling, holes are produced by a rotating cutting tool.

Historically, these machining processes began in a generally manual form. As technology advanced, both with respect to power generation and machining, these machining processes became more automated by, for example, the use of cams, which allowed for mass producing of a same shape or cut. From cams, the technology has continued to move forward, with programmable machines being the norm in the more modem machine shops of today. An example of a programmable machine would be a computer numerical control (CNC) machine which allows for a single machine to be able to perform close tolerance machining which can be reprogrammed between jobs.

These machining processes use a cutting tool to create a metal chip from the workpiece which is then removed. This forming and removal of the metal chip occurs from the relative motion between the cutting tool and the workpiece when the cutting tool and the workpiece are in contact with each other. The cutting tool and the workpiece are often operating at high speeds relative to each other which generates heat in addition to the formation of the chip. In order to cool and lubricate the cutting tool, a fluid is often distributed in the area of the operation.

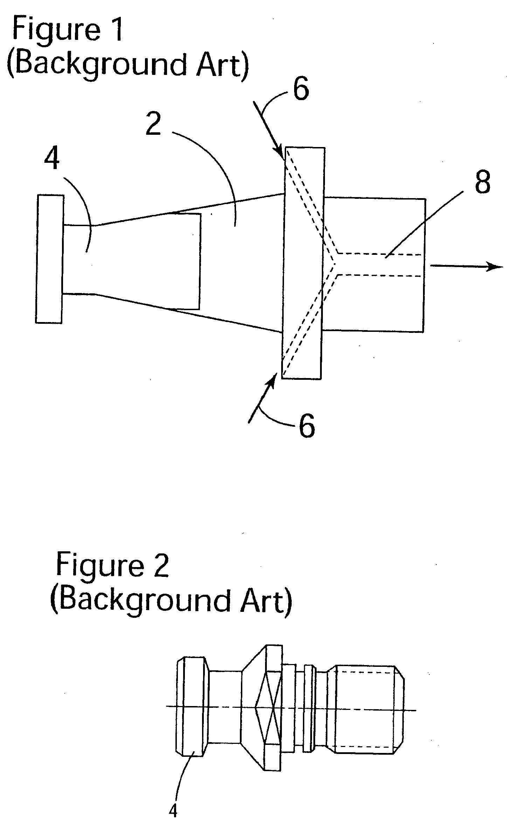

Depending upon the process used and the specific job to be performed, a fluid, e.g., a coolant, can be delivered either internally or externally to the cutting tool. When the coolant is applied internally, the coolant is often routed through an internal portion of the machine, then through a tool holder and then delivered to the cutting tool. For external coolant delivery, coolant can be routed to an external opening, or flange, on the tool holder and then delivered to the cutting tool. An example of this is shown in Figure 1. The tool holder 2 is attached to a pull stud bolt 4. External coolant 6 enters the tool holder 2 and flows through a channel 8 before exiting the tool holder 2 and lubricating a cutting tool (not shown). A more detailed example of a conventional pull stud bolt 4 (also referred to as "DIN69872/B") for use in external coolant systems is shown in Figure 2. Alternatively, coolant can also be delivered externally via coolant lines which are not part of the machine spindle and/or tool holder.

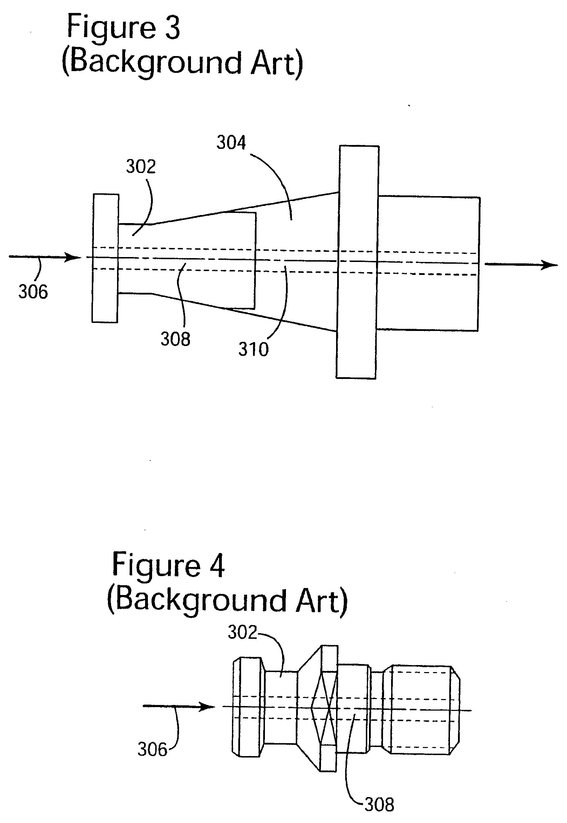

When the coolant is applied internally, the coolant is often routed through an internal portion of the machine to the tool holder and then delivered to the cutting tool. An example of this is shown in Figure 3. The pull stud bolt 302 is attached to the tool holder 304. Coolant 306 enters the pull stud bolt 302 and flows through channel 308 into a channel 310 in the tool holder 304. The coolant 306 then exits the tool holder 304 enroute to the cutting tool (not shown). A more detailed example of a conventional pull stud bolt 302 (also referred to as "DIN69872/A") for use in internal coolant systems is shown in Figure 4. Since different machining jobs can require different coolant needs, having the necessary parts for changing over from the internal coolant operation to the external coolant operation and then performing the changeover can increase down time between jobs and add cost which reduces overall operating efficiency of the machine. Additionally, if the pull stud bolt 302 for internal coolant operations is used with a tool holder 2 for external coolant operations, damage caused by the coolant can occur because the coolant can enter into the spindle and damage electrical parts which need to remain dry.

Accordingly, systems and methods for improving machine efficiency are desirable.

### BRIEF SUMMARY OF THE INVENTION

According to the invention there is a pull stud bolt according to claim 1 for connecting a tool holder to a collet in a spindle. The pull stud bolt includes: a body having a longitudinal passage fluidly connected to a cavity, the cavity fluidly connected to a plurality of longitudinal channels; a sealing ring disposed between an end of the longitudinal passage and the cavity; a spring disposed in the cavity; and a sphere configured to be biased by the spring. The sphere is configured to unblock the end of the longitudinal passage by losing contact with the sealing ring when a first force applied to the sphere from the spring is less than a second force applied by a fluid flowing through the longitudinal passage, wherein the first and second forces are substantially opposite in direction of application.

Preferred embodiments are stated in the dependent claims.

A method for assembling a pull stud bolt which uses both an internal coolant path and an external coolant path includes: configuring a body to receive a tool holder the body having a longitudinal passage fluidly connected to a cavity, the cavity fluidly connected to a plurality of longitudinal channels; disposing a sealing ring between an end of the longitudinal passage and the cavity; disposing a spring in the cavity; and configuring a sphere to be biased by the spring, the sphere is configured to unblock the end of the longitudinal passage by losing contact with the sealing ring when a first force applied to the sphere from the spring is less than a second force applied by a fluid flowing through the longitudinal passage, wherein the first and second forces are substantially opposite in direction of application.

According to another exemplary embodiment, there is a computer numerical control (CNC) machine which has at least two coolant paths. The CNC machine includes: a spindle, the spindle includes: a drawing bolt; an inner sleeve; and a collet; a tool holder; and a pull stud bolt. The pull stud bolt includes: a body configured to receive a tool holder, the body having a longitudinal passage fluidly connected to a cavity, the cavity fluidly connected to a plurality of longitudinal channels; a sealing ring disposed between an end of the longitudinal passage and the cavity; a spring disposed in the cavity; and a sphere configured to be biased by the spring. The sphere is configured to unblock the end of the longitudinal passage by losing contact with the sealing ring when a first force applied to the sphere from the spring is less than a second force applied by a fluid flowing through the longitudinal passage, wherein the first and second forces are substantially opposite in direction of application.

### BRIEF DESCRIPTION OF THE SEVERAL VIEWS OF THE DRAWINGS

The accompanying drawings illustrate exemplary embodiments, wherein:
Figure 1 depicts a tool holder and a pull stud bolt for use in external coolant applications;
Figure 2 shows the pull stud bolt for use in external applications;
Figure 3 shows a tool holder and a pull stud bolt for use in internal coolant applications;
Figure 4 illustrates the pull stud bolt for use in internal coolant applications;
Figure 5 shows parts used for attaching a tool holder to a spindle according to exemplary embodiments;
Figures 6 shows a pull stud bolt for use in both internal and external coolant operations according to exemplary embodiments;
Figures 7 illustrates an end of the pull stud bolt which mates with the tool holder according to exemplary embodiments;
Figures 8 depicts an open position, a closed position and a stroke of a spring in the pull stud bolt according to exemplary embodiments;
Figure 9 shows a coolant flow for external coolant operations according to exemplary embodiments;
Figure 10 shows the coolant flow for internal coolant operations according to exemplary embodiments;
Figure 11 depicts the pull stud bolt according to exemplary embodiments;
Figure 12 illustrates an end of the pull stud bolt which mates with the tool holder according to exemplary embodiments;
Figures 13-17 show parts included in the pull stud bolt according to exemplary embodiments;
Figure 18 shows a flowchart for a method of operating with either the internal or the external coolant flow according to exemplary embodiments; and
Figure 19 shows a flowchart for a method for assembling a pull stud bolt.

### DETAILED DESCRIPTION OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

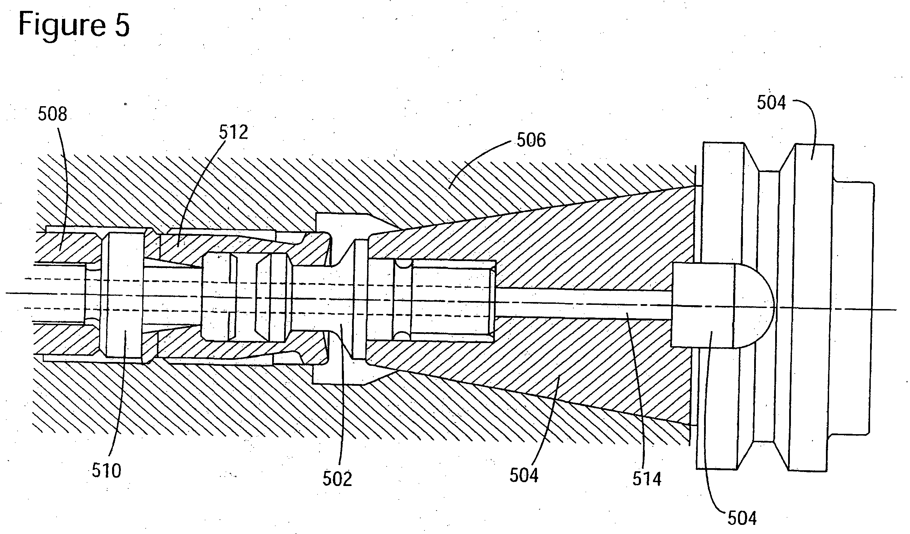

As described in the Background section, systems and methods for improving machine efficiency are desirable for machines which use a tool holder and a pull stud bolt in environments with at least two possible coolant paths, e.g., an internal and an external coolant path. Prior to describing exemplary embodiments which can improve machine efficiency, the environment in which a tool holder 504 and a pull stud bolt 502 are used is now described with respect to Figure 5. According to exemplary embodiments, a machine spindle 506 can contain a drawing bolt 508, an inner sleeve 510 and a collet 512 which is used to clamp down and hold the pull stud bolt 502. The machine spindle 506, can be a machine spindle used in, for example, a computer numerical control (CNC) machine.

The pull stud bolt 502 can be connected via threads to the tool holder 504. A cutting tool (not shown) is attached to the end of the tool holder 504 which is opposite from the end of the tool holder 504 which is attached to the pull stud bolt 502. Also shown, in this exemplary embodiment, is a coolant passage 514. While the tool holder 504 is shown with only an internal coolant path, tool holder 504 can be of a version which uses an external coolant path similar to the one as shown in, for example, Figure 1. More details associated with the exemplary pull stud bolt 502 and the coolant passage 514 are described below.

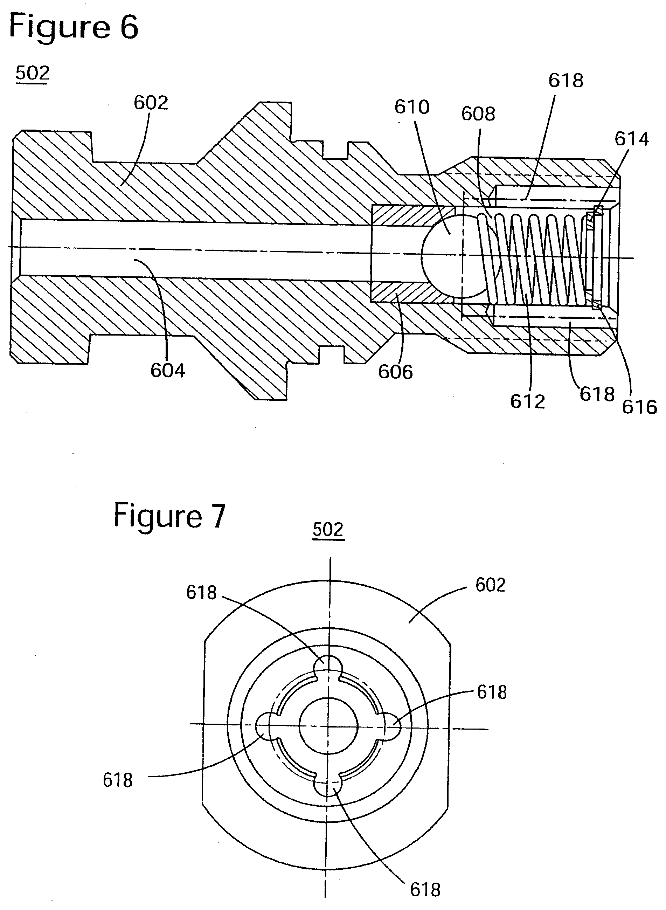

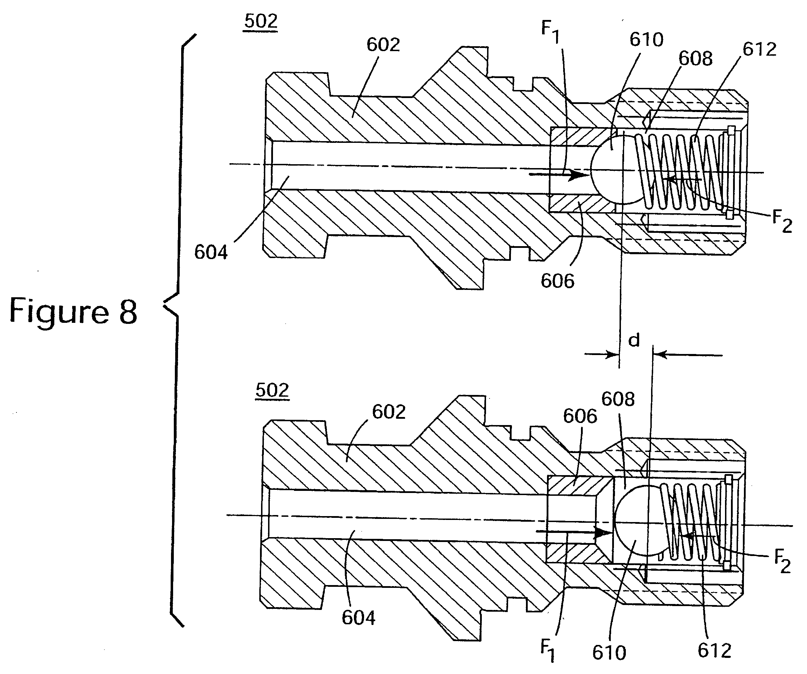

According to exemplary embodiments the pull stud bolt 502 which can be used in applications which use either the internal or the external coolant flow path is shown in Figures 6 and 7. Figure 6 shows a longitudinal cross section of the pull stud bolt 502 and Figure 7 shows an end view where a plurality of coolant channels 618 exit the pull stud bolt 502. As shown in Figure 6, the pull stud bolt 502 includes a body section 602 which contains a longitudinal passage 604 for receiving and channeling a coolant flow when operating in an internal coolant mode. At one end of the longitudinal passage 604 there is a sealing ring 606 which surrounds the end of the longitudinal passage 604 and which is in contact with a cavity 608. The sealing ring 606 can also be in contact with a sphere 610, with the sealing ring 606 being shaped such that the sphere 610 when seated against the sealing ring 606 blocks the longitudinal passage 604. When fully seated, the sphere 610 blocks the transmission of fluid in either of the two possible flow directions. This fully seated or closed position of the sphere 610 is shown in Figure 6, however, according to other exemplary embodiments, the sphere 610 can be located in other positions, e.g., an open position, to allow the flow of coolant based upon the force of the coolant moving through the longitudinal passage 604 as compared to the force applied by the spring 612 (as shown in Figure 8 and described in more detail below).

According to exemplary embodiments, the sphere 610 is in contact with a spring 612, which in turn is in contact with a washer ring 614. The washer ring 614 is also in contact with another ring, e.g., a Seeger ring 616. A plurality of fluid channels 618 are also connected to the cavity 608. As described above, Figure 7 shows an end view where a plurality of coolant channels exit the pull stud bolt 502. While four fluid channels 618 are shown, other combinations can be manufactured and used as needed for the desired fluid transmission into the mating tool holder 504.

According to exemplary embodiments, as described above, the pull stud bolt 502 can be opened or closed based on the position of the sphere 610. The open and closed position for the pull stud bolt 502 is shown in Figure 8. The upper pull stud bolt 502 diagram in Figure 8 shows the closed position with the sphere 610 being seated on the sealing ring 606 and blocking access for fluid between the longitudinal passage 604 and the cavity 608. This occurs when a force F1 of any fluid being transmitted though the longitudinal passage 604 and applied to the sphere 610 is less than a force F2 applied on the sphere 610 by the spring 612. The lower pull stud bolt 502 diagram in Figure 8 shows the open position with the sphere 610 not being seated on the sealing ring 606 and not blocking access for fluid between the longitudinal passage 604 and the cavity 608. This occurs when the force F1 of any fluid being transmitted though the longitudinal passage 604 and applied to the sphere 610 is greater than the force F2 applied on the sphere 610 by the spring 612. Both positions, i.e., the open and closed position, for the exemplary pull stud bolt 502 are illustrated in Figure 8. The difference in positions of the sphere 610 show an exemplary stroke, i.e., a distance "d" moved by the spring 612, e.g., 5.0 mm and/or a range of 3.0 mm - 6.0 mm. According to an exemplary embodiment, the coolant can be under a pressure of approximately 6 bar, however according to other exemplary embodiments, the coolant can be under other pressures.

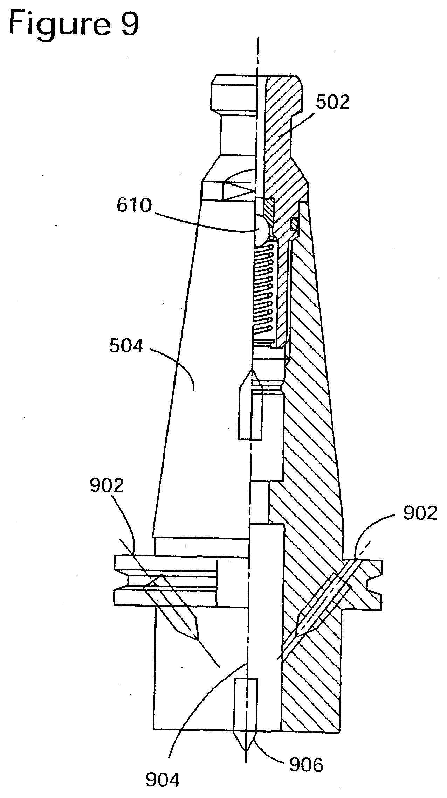

According to exemplary embodiments, the pull stud bolt 502 and the tool holder 504 can operate in an external coolant configuration as shown in Figure 9. The arrows show the direction of flow for the coolant. Coolant enters the tool holder through the openings of an adaptor flange 902 and arrives at a center channel 904 in the tool holder 504. Most of the coolant will go "down" towards an exit 906 for lubricating the cutting tool. However, some of the coolant may attempt to go "up" towards the pull stud bolt 502. When entering the pull stud bolt 502, the coolant will be blocked by the seated sphere 610 so that electrical parts within the machine spindle 506 are protected.

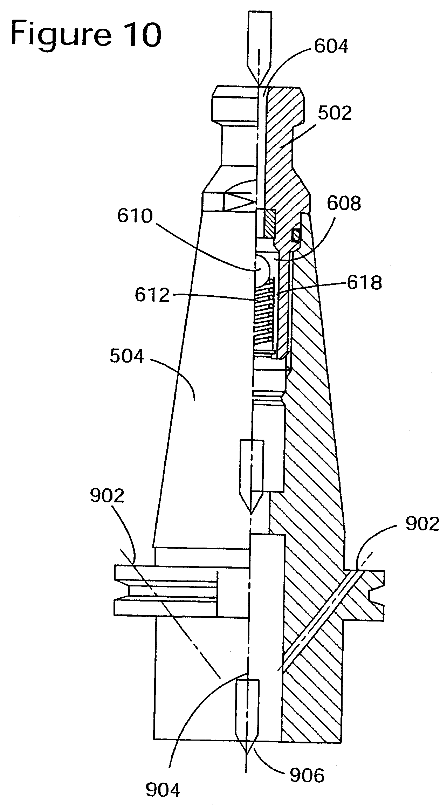

According to another exemplary embodiment, the pull stud bolt 502 and the tool holder 504 can operate in the internal coolant configuration as shown in Figure 10. The arrows show the direction of flow for the coolant. Coolant enters the pull stud bolt 502 and follows the longitudinal passage 604. The force F1 of the coolant applied to the sphere 610 is greater than the force F2 of the spring 612 applied to the sphere 610 which moves the sphere 610 to the open position. The coolant then flows through the cavity 608 to the plurality of coolant channels 618. From there the coolant flows into the center channel 904 in the tool holder 504 and on to the exit 906 for lubricating the cutting tool.

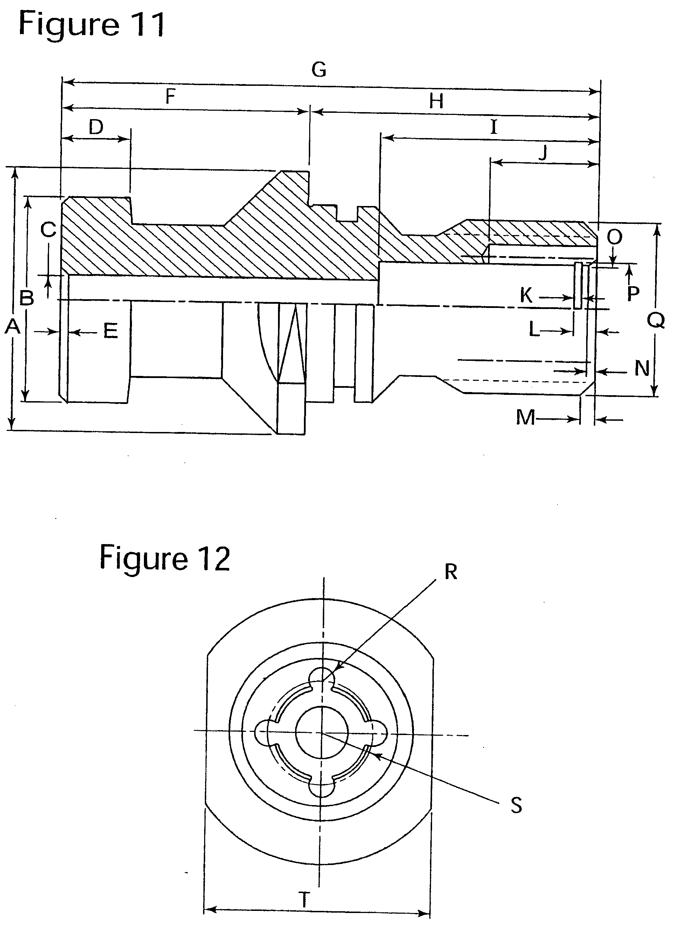

According to an exemplary embodiment, the pull stud bolt can be manufactured using the dimensions shown below in Table 1 as matched to Figures 11 and 12.

**Table 1**

| Reference Character | Value |
|---|---|
| A | Ø 36 +/-2.0 mm |
| B | Ø 28 +/-2.0 mm |
| C | Ø 7 +/-1.5 mm |
| D | 9.5 +/-1.5 mm |
| E | Chamfer (e.g., 1x45°) |
| F | 34 +/-2.0 mm |
| G | 74 +/-4.0 mm |
| H | 40 +/-2.0 mm |
| I | 30 +/-2.0 mm |
| J | 15 +/-2.0 mm |
| K | 1 +/-0.5 mm |
| L | 3 +/-1.5 mm |
| M | Chamfer (e.g., 2x45°) |
| N | Chamfer (e.g., 1x45°) |
| O | Ø 12 +/-1.5 mm |
| P | Ø 13 +/-1.5 mm |
| Q | M 24 6g (Screw Tolerance) |
| R | Radius (e.g., R 175) |
| S | Radius (e.g., R 7) |
| T | 30 +/-2.0 mm |

However, according to other exemplary embodiments, dimensions of the pull stud bolt 502 can be modified to fit the tool holder 504 as used, to ensure the desired coolant flow and house the desired spring 612. Other dimensions, tolerances, materials and heat treatments can be taken from the DIN69872 normative dimensions as a baseline, and modified as needed to accommodate the exemplary embodiments described herein.

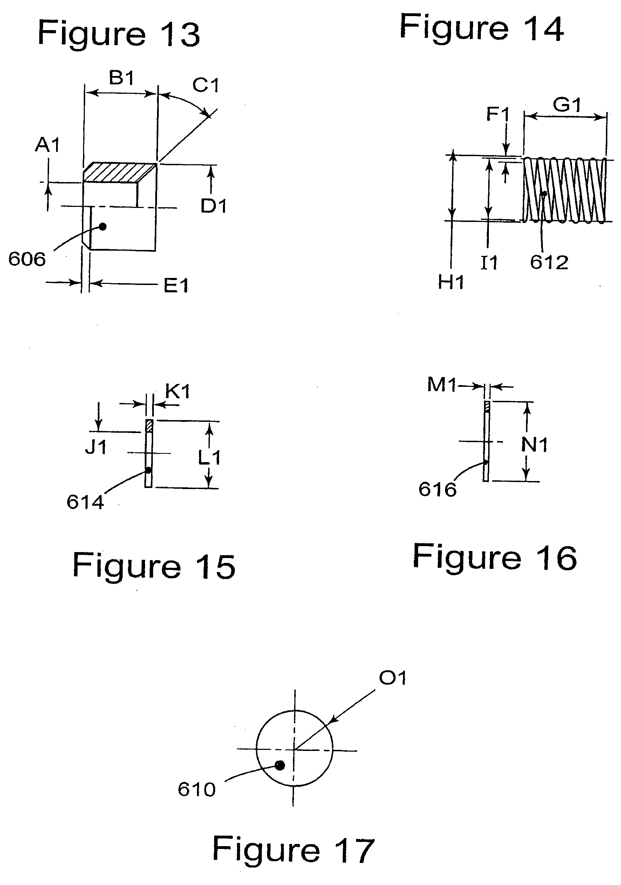

According to exemplary embodiments, other parts which are used in the pull stud bolt 502 are shown in Figures 13-17, with Figure 13 showing the seal ring 606, Figure 14 showing the spring 612, Figure 15 showing the washer ring 614, Figure 16 showing the Seeger ring 616 and Figure 17 showing the sphere 610. A purely illustrative range of dimensions and materials are shown below in Table 2 for the parts shown in Figures 13-17.

**Table 2**

| Component | Reference Character | Value (or reference part number or material) |
|---|---|---|
| Seal Ring 606 | A1 | Ø 7 +/-1.5 mm |
| Seal Ring 606 | B1 | 10 +/-1.5 mm |
| Seal Ring 606 | C1 | Angled Edge (e.g., 45 °) |
| Seal Ring 606 | D1 | Ø 12 +/-1.5mm |
| Seal Ring 606 | El | Chamfer (e.g., 1x45 °) |
| Seal Ring 606 | Materials | Brass CuZn37, UNI EN 12449 |
| Spring 612 | F1 | Ø 1 +/-0.5mm |
| Spring 612 | G1 | 13 +/-2.0 mm |
| Spring 612 | H1 | Ø 11+/-1.5 mm |
| Spring 612 | I1 | Ø 10 +/-1.5 mm |
| Spring 612 | # of Active Coils | 3 |
| Spring 612 | Compression Force | 2 N/mm |
| Spring 612 | Materials | UNI X10CrNi1707 |
| Washer Ring 614 | J1 | Ø 7 +/-1.5 mm |
| Washer Ring 614 | K1 | 1 +/-0.5 mm |
| Washer Ring 614 | L1 | Ø 11.5 +/-1.5 mm |
| Washer Ring 614 | Materials | UNI6592-DIN125A, Other Stainless Steels |
| Seeger Ring 616 | M1 | 1 +/-0.5 mm |
| Seeger Ring 616 | N1 | Ø 13 +/-2.0 mm |
| Seeger Ring 616 | Materials | UNI 7437(3654)-DIN 472, Other Stainless Steels |
| Sphere 610 | O1 | Radius (e.g., R 5) |
| Sphere | Materials | 100Cr6, UNI3097 |

However, according to other exemplary embodiments, dimensions can be modified to fit the tool holder 504 as used, to ensure the desired coolant flow and house the desired spring 612. Similarly, modifications to the materials used can be made as well as desired.

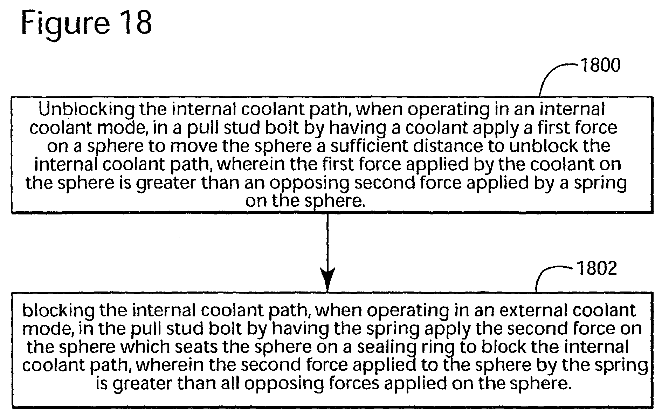

According to exemplary embodiments, there is a method for operating a machining device which can use either the internal coolant path or the external coolant path as shown in the flowchart of Figure 18. The method includes: at step 1800 unblocking the internal coolant path, when operating in an internal coolant mode, in a pull stud bolt by having a coolant apply a first force on a sphere to move the sphere a sufficient distance to unblock the internal coolant path, wherein the first force applied by the coolant on the sphere is greater than an opposing second force applied by a spring on the sphere; and at step 1804 blocking the internal coolant path, when operating in an external coolant mode, in the pull stud bolt by having the spring apply the second force on the sphere which seats the sphere on a sealing ring to block the internal coolant path, wherein the second force applied to the sphere by the spring is greater than all opposing forces applied on the sphere.

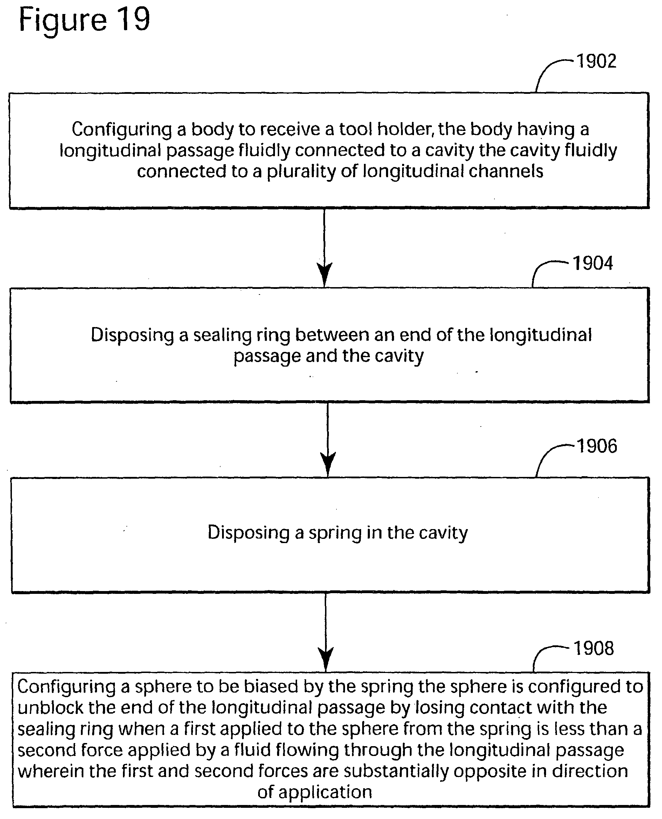

According to exemplary embodiments, there is a method for assembling a pull stub bolt which uses either the internal coolant path or the external coolant path as shown in the flowchart of Figure 19. The method includes: at step 1902 configuring a body to receive a tool holder the body having a longitudinal passage fluidly connected to a cavity, the cavity fluidly connected to a plurality of longitudinal channels; at step 1904 disposing a sealing ring between an end of the longitudinal passage and the cavity; at step 1906 disposing a spring in the cavity; and at step 1908 configuring a sphere to be biased by the spring , the sphere is configured to unblock the end of the longitudinal passage by losing contact with the sealing ring when a first force applied to the sphere from the spring is less than a second force applied by a fluid flowing through the longitudinal passage, wherein the first and second forces are substantially opposite in direction of application.

## Claims

1. A pull stud bolt (502) for connecting a tool holder (504) to a collet (512) in a spindle (506), the pull stud bolt (502) comprising:
a body (602) configured to receive a tool holder (504), the body (602) having a longitudinal passage (604) fluidly connected to a cavity (608), **characterised in that** the cavity (608) fluidly connected to a plurality of longitudinal channels (618);
and **in that** the pull stud bolt (502) further comprises a sealing ring (606) disposed between an end of the longitudinal passage (604) and the cavity (608);
a spring (612) disposed in the cavity (608); and
a sphere (610) configured to be biased by the spring (612), the sphere (610) is configured to unblock the end of the longitudinal passage (604) by losing contact with the sealing ring (606) when a first force applied to the sphere (610) from the spring (612) is less than a second force applied by a fluid flowing through the longitudinal passage (604), wherein the first and second forces are substantially opposite in direction of application.

2. The pull stud bolt (502) of claim 1, further comprising:
a washer (614) in contact with the spring (612) on an end opposite from an end of the spring (612) which is in contact with the sphere (610); and
a Seeger ring (616) in contact with the washer (614), the Seeger ring (616) defining an end of the cavity (608).

3. The pull stud bolt (502) of claim 1 or claim 2, wherein the sphere (610) is in contact with both the sealing ring (606) and the spring (612) when a machine in which the pull stud bolt (502) is disposed is using an external coolant flow.

4. The pull stud bolt (502) of any preceding claim, wherein there is a gap between the sphere (610) and the sealing ring (606) when a machine in which the pull stud bolt (502) is disposed is using an internal coolant flow which flows through the longitudinal passage (604).

5. The pull stud bolt (502) of any preceding claim, wherein the stroke of the spring (612) is in the range of 3-6 mm.

6. The pull stud bolt (502) of any preceding claim, wherein the pull stud bolt (502) is disposed in a computer numerical control machine which performs machining operations which selectively uses an internal coolant flow or an external coolant flow.

7. A computer numerical control (CNC) machine which has at least two coolant paths, the CNC machine comprising:
a spindle (506), the spindle (506) including:
a drawing bolt (508),
an inner sleeve (510), and
a collet (512);
a tool holder (504); and
a pull stud bolt (502) according to any preceding claim.

8. The CNC machine of claim 7 further comprising:
a Seeger ring (616) in contact with a washer (614), wherein
the washe (614) is in contact with the spring on an end opposite from an end of the spring (612) which is in contact with the sphere (612).

## Patentansprüche

1. Zugstehbolzen (502) zum Verbinden eines Werkzeughalters (504) mit einem Spannfutter (512) in einer Spindel (506), wobei der Zugstehbolzen (502) Folgendes umfasst:
einen Körper (602), der zum Aufnehmen eines Werkzeughalters (504) ausgelegt ist, wobei der Körper (602) einen länglichen Durchgang (604) hat, der fluid mit einem Hohlraum (608) verbunden ist,
**dadurch gekennzeichnet, dass** der Hohlraum (608) fluid mit mehreren länglichen Kanälen (618) verbunden ist;
und dadurch, dass der Zugstehbolzen (502) ferner einen Dichtungsring (606) umfasst, der zwischen einem Ende des länglichen Durchgangs (604) und dem Hohlraum (608) angeordnet ist;
eine Kugel (610), die durch die Feder (612) vor gespannt ist, wobei die Kugel (610) dafür ausgelegt ist, das Ende des länglichen Durchgangs (604) durch das Verlieren von Kontakt mit den Dichtungsring (606) freizugeben, wenn eine erste Kraft, die auf die Kugel (610) von der Feder (612) ausgeübt wird, kleiner als eine zweite Kraft ist, die durch ein Fluid ausgeübt wird, dass durch den länglichen Durchgang (604) strömt, wobei die erste und zweite Kraft im wesentlichen in der Wirkungsrichtung entgegengesetzt sind.

2. Zugstehbolzen (502) nach Anspruch 1, ferner umfassend:
eine Unterlegscheibe (614) in Kontakt mit der Feder (612) an einem Ende entgegengesetzt von einem Ende der Feder (612), das in Kontakt mit der Kugel (610) ist;
und
ein Seegerring (616) in Kontakt mit der Unterlegscheibe (614), wobei der Seegerring (616) ein Ende des Hohlraums (608) definiert.

3. Zugstehbolzen (502) nach Anspruch 1 oder 2, wobei die Kugel (610) in Kontakt sowohl mit dem Dichtungsring (606) und der Feder (612) ist, wenn eine Maschine, in der sich der Zugstehbolzen (502) befindet, einen externen Kühlmittelstrom verwendet.

4. Zugstehbolzen (502) nach einem der vorhergehenden Ansprüche, wobei es einen Spalt zwischen der Kugel (610) und dem Dichtungsring (606) gibt, wenn eine Maschine, in der sich der Zugstehbolzen (502) befindet, einen internen Kühlmittelstrom verwendet, der durch den länglichen Durchgang (604) strömt.

5. Zugstehbolzen (502) nach einem der vorhergehenden Ansprüche, wobei der Hub der Feder (612) im Bereich von 3-6 mm liegt.

6. Zugstehbolzen (502) nach einem der vorhergehenden Ansprüche, wobei der Zugstehbolzen (502) in einer CNC-Maschine angeordnet ist, die Bearbeitungsoperationen ausführt, die selektiv einen internen Kühlmittelstrom oder einen externen Kühlmittelstrom verwendet.

7. CNC-Maschine, die mindestens zwei Kühlmittelwege hat, wobei die CNC-Maschine Folgendes umfasst:
eine Spindel (506), wobei die Spindel (506) umfasst:
einen Zugbolzen (508),
eine Innenhülse (510), und
ein Spannfutter (512);
einen Werkzeughalter (504); und
einen Zugstehbolzen (502) nach einem der vorherigen Ansprüche.

8. CNC-Maschine nach Anspruch 7, ferner umfassend:
einen Seegerring (616) in Kontakt mit einer Unterlegscheibe (614), wobei
die Unterlegscheibe (614) in Kontakt mit der Feder an einem Ende entgegengesetzt von einem Ende der Feder (612) ist, das in Kontakt mit der Kugel (612) ist.

## Revendications

1. Boulon fileté de traction (502) pour raccorder un porte-outil (504) à une douille (512) dans une broche (506), la boulon fileté de traction (502) comprenant :
un corps (602) configuré pour recevoir un porte-outil (504), le corps (602) ayant un passage longitudinal (604) en communication fluidique avec une cavité (608), **caractérisé en ce que** la cavité (608) est en communication fluidique avec une pluralité de canaux longitudinaux (618) ;
et **en ce que** le boulon fileté de traction (502) comprend en outre une bague d'étanchéité (606) disposée entre une extrémité du passage longitudinal (604) et la cavité (608) ;
un ressort (612) disposé dans la cavité (608) ; et
une sphère (610) configurée pour être sollicitée par le ressort (612), la sphère (610) étant configurée pour débloquer l'extrémité du passage longitudinal (604) en perdant le contact avec la bague d'étanchéité (606) lorsqu'une première force appliquée à la sphère (610) par le ressort (612) est inférieure à une seconde force appliquée par un fluide s'écoulant à travers le passage longitudinal (604), dans lequel la première et la seconde force sont sensiblement opposées dans le sens d'application.

2. Boulon fileté de traction (502) selon la revendication 1, comprenant en outre :
une rondelle (614) en contact avec le ressort (612) à une extrémité opposée à une extrémité du ressort (612) qui est en contact avec la sphère (610) ; et
un anneau de Seeger (616) en contact avec la rondelle (614), l'anneau de Seeger (616) définissant une extrémité de la cavité (608).

3. Boulon fileté de traction (502) selon la revendication 1 ou la revendication 2, dans lequel la sphère (610) est en contact à la fois avec la bague d'étanchéité (606) et le ressort (612) lorsqu'une machine dans laquelle le boulon fileté de traction (502) est disposé utilise un écoulement de réfrigérant externe.

4. Boulon fileté de traction (502) selon l'une quelconque des revendications précédentes, dans lequel il y a un intervalle entre la sphère (610) et la bague d'étanchéité (606) lorsqu'une machine dans laquelle le boulon fileté de traction (502) est disposé utilise un écoulement de réfrigérant interne qui s'écoule à travers le passage longitudinal (604).

5. Boulon fileté de traction (502) selon l'une quelconque des revendications précédentes, dans lequel la course du ressort (612) se situe dans la plage de 3 à 6 mm.

6. Boulon fileté de traction (502) selon l'une quelconque des revendications précédentes, dans lequel le boulon fileté de traction (502) est disposé dans une machine à commande numérique pilotée par ordinateur qui effectue des opérations d'usinage dans lesquelles on utilise sélectivement un écoulement de réfrigérant interne ou un écoulement de réfrigérant externe.

7. Machine à commande numérique pilotée par ordinateur (CNC) qui a au moins deux trajets de réfrigérant, la machine CNC comprenant :
une broche (506), la broche (506) comprenant :
un boulon d'étirage (508),
un manchon interne (510) et
une douille (512) ;
un porte-outil (504) ; et
un boulon fileté de traction (502) selon l'une quelconque des revendications précédentes.

8. Machine CNC selon la revendication 7, comprenant en outre :
un anneau de Seeger (616) en contact avec une rondelle (614), dans laquelle :
la rondelle (614) est en contact avec le ressort à une extrémité opposée à une extrémité du ressort (612) qui est en contact avec la sphère (612).
